# EUROPÄISCHE PATENTANMELDUNG

(11) **EP 2 775 091 A1**
(43) Veröffentlichungstag der Anmeldung: **10.09.2014**
(21) Anmeldenummer: 13001158.8
(22) Anmeldetag: 08.03.2013
(51) Int. Cl.: E21B 19/16, F16C 13/00

(54) **Stützrolle**

(71) Anmelder: Schaeffler Technologies GmbH & Co. KG, 91074 Herzogenaurach (DE)
(72) Erfinder: Sims, Robert, 97424 Schweinfurt (DE); Hölzel, Christian, 91320 Ebermannstadt (DE)

(57) **Zusammenfassung**

Stützrolle (1), insbesondere zum Greifen eines drehbaren Bohrgestänges, umfassend einen Umring (3) mit einer gerändelten Umfangsfläche (9) und ein Wälzlager (4) mit einem Außenring (5), mit einem relativ zum Außenring (5) drehbaren Innenring (6) und mit einer Anzahl von zwischen dem Außenring (5) und dem Innenring (6) angeordneten Wälzkörpern (7), wobei das Wälzlager (4) mit seinem Außenring (5) drehfest in den Umring (3) eingesetzt ist.

## Beschreibung

### Gebiet der Erfindung

Die Erfindung betrifft eine Stützrolle, die insbesondere zum Greifen eines drehbaren Bohrgestänges einsetzbar ist. Eine solche Stützrolle ist beispielsweise in einer Greifklaue eines Greifers angeordnet, wie er zum Hantieren von Bohrstangen eines Bohrgestänges verwendet wird.

### Hintergrund der Erfindung

Auf Bohrtürmen oder auf Off-Shore-Bohrplattformen wird es notwendig, den Bohrstrang bis zum Erreichen der zu erschließenden Öl- oder Gasvorkommen kontinuierlich durch Aufsetzen von weiteren Bohrstangen zu verlängern. Dazu ergreift ein entsprechend ausgebildeter Greifer eine üblicherweise horizontal gelagerte Bohrstange und richtet diese vertikal aus. Anschließend wird die vertikal ausgerichtete Bohrstange von oben der letzten Bohrstange des Bohrstrangs aufgesetzt und mit dieser verschraubt. Aus Sicherheitsgründen wird zum Verschrauben mit dem Bohrstrang üblicherweise die aufgesetzte Bohrstange verdreht, so dass eine Rotation der ergriffenen Bohrstange im Greifer ermöglicht sein muss. Hierzu sind in den Greifklauen eines Greifers für Bohrgestänge Stützrollen eingesetzt, über die die Bohrstange zum einen insbesondere in axialer Richtung sicher gehalten werden muss, und über die zum anderen zugleich die Rotation der Bohrstange um ihre Längsachse ermöglicht ist. Diese Anforderungen bedingen eine besondere Auslegung der eingesetzten Stützrollen.

### Aufgabe der Erfindung

Der Erfindung liegt die Aufgabe zugrunde, eine Stützrolle der eingangs genannten Art anzugeben, die insbesondere den beschriebenen Anforderungen beim Hantieren von Bohrgestänge genügt.

### Zusammenfassung der Erfindung

Die gestellte Aufgabe wird erfindungsgemäß gelöst durch eine Stützrolle, die einen Umring mit einer gerändelten Umfangsfläche und ein Wälzlager mit einem Außenring, mit einem relativ zum Außenring drehbaren Innenring und mit einer Anzahl von zwischen dem Außenring und dem Innenring angeordneten Wälzkörpern umfasst, wobei das Wälzlager mit seinem Außenring drehfest in den Umring eingesetzt ist.

Die Erfindung geht dabei von der Überlegung aus, dass durch eine gleitgelagerte Stützrolle zwar eine gute Kraftübertragung des Greifers auf die Bohrstange und somit ein sicherer Halt gewährleistet ist. Durch die hohen mechanischen Belastungen beim Hantieren einer Bohrstange ist jedoch die Lebensdauer des Gleitlagers bedingt durch den hohen Verschleiß relativ begrenzt. Insofern sieht die Erfindung vor, die Stützrolle zur drehbaren Lagerung mit einem Wälzlager auszustatten, um die Rotation der aufgenommenen Bohrstange zu ermöglichen. Durch den gegenüber einem Gleitlager konstruktionsbedingt niedrigeren Verschleiß eines Wälzlagers wird die Lebensdauer der Stützrolle beträchtlich verlängert. Um einen sicheren Halt der vom Greifer aufgenommenen Bohrstange zu gewährleisten, wird dem Außenring des Wälzlagers ein Umring aufgesetzt, der eine gerändelte Umfangsfläche aufweist. Durch die gerändelte Umfangsfläche wird ein sicherer Reibschluss mit der aufgenommenen Bohrstange erzielt. Die Bohrstange kann mit dem Greifer sicher manipuliert werden. Insbesondere ist sichergestellt, dass die aufgenommene Bohrstange bei vertikaler Ausrichtung nicht im Greifer durchrutscht.

Durch die Rändelung oder Riffelung seiner Umfangsfläche wird der Umring griffiger. Eine gerändelte Oberfläche weist durch die insbesondere quer zueinander eingebrachten Rillen im Unterschied zu einer glatten Oberfläche eine Vielzahl von spitz zulaufenden Teilflächen auf, wodurch die auf einen entsprechenden Kontaktpartner wirkende Normalkraft erhöht ist. Auch bei einem Kontaktpartner mit glatter Oberfläche ist zudem eine hohe Anzahl von Auflagepunkten gewährleistet. Die Rändelung oder Riffelung kann auf vielfältige Weise in die Umfangsfläche des Umrings eingebracht sein. Insbesondere ist die Rändelung gemäß der Deutschen Industrie Norm DIN 82 eingebracht.

Um den hohen mechanischen Belastungen beim Hantieren von Bohrstangen Stand zu halten, ist der Umring bevorzugt aus einem gehärteten Stahl gefertigt. Weiter bevorzugt ist als Stahl ein rostfreier Stahl eingesetzt. Damit wird insbesondere den korrosiven Außenbedingungen Rechnung getragen, wie sie beispielsweise bei Off-Shore-Plattformen auftreten.

Grundsätzlich kann die drehfeste Anbindung des Außenrings des Wälzlagers an den Umring durch einen Form-, Reib- oder Materialschluss erfolgen. Für einen dauerhaften Einsatz der Stützrolle hat es sich dabei als besonders vorteilhaft herausgestellt, wenn der Außenring mittels eines Presssitzes in den Umring eingesetzt ist. Dazu ist der Umring mit einem Innendurchmesser gefertigt, der geringfügig kleiner ist als der Außendurchmesser des Außenrings. Nach Erhitzen des Umrings ist dieser erweitert und kann dem Außenring aufgeschoben werden. Nach Abkühlen entsteht über die Umfangsflächen von Umring und Außenring ein sicherer und den Belastungen Stand haltender Presssitz.

Das für die Stützrolle eingesetzte Wälzlager muss zum Hantieren von Bohrstangen eine hohe Tragzahl bereitstellen. Aus diesem Grund ist das Wälzlager bevorzugt als ein vollrolliges Wälzlager ausgestaltet. Durch die größtmögliche Anzahl von Wälzkörpers ist ein solches Lager äußerst tragfähig und sehr steif. Weiter bevorzugt ist das Wälzlager als ein vollrolliges Zylinderrollenlager ausgebildet. Dieses ist insbesondere in der Lage, extrem hohe Radiallasten aufzunehmen.

Zweckmäßigerweise ist das Wälzlager doppelreihig ausgebildet. Hierdurch kann das Wälzlager hinsichtlich der beim Hantieren von Bohrstangen auftretenden Belastungen weiter optimiert werden.

In einer weiter bevorzugten Ausgestaltung ist der Umring in axialer Richtung über den Außenring des Wälzlagers hinaus verlängert. Dort kann beispielsweise ein Bund angeordnet sein, über den eine axiale Krafteinleitung vom Umring in den Außenring des Wälzlagers möglich wird.

Weiter bevorzugt liegt in axialer Richtung dem Innenring des Wälzlagers eine Distanzscheibe auf. Diese stellt zum einen den notwendigen Abstand des sich drehenden Umrings zum Rand des Aufnahmefensters in der Greifklaue her. Zum anderen sind durch eine Distanzscheibe aber auch der Innenraum der Stützrolle und insbesondere das Wälzlager vor äußeren Einflüssen, insbesondere vor Verunreinigungen und Feuchtigkeit, geschützt. Um die Reibung des Umrings gegenüber der Distanzscheibe zu verringern, ist die Distanzscheibe bevorzugt axial vom Außenring und radial vom Umring beabstandet.

Vorteilhafterweise ist die Distanzscheibe mit einer Korrosionsschutzschicht versehen. Dadurch kann für die Distanzscheibe gegebenenfalls ein vergleichsweise günstiges Material eingesetzt und zugleich den äußeren Bedingungen beim bestimmungsgemäßen Einsatz der angegebenen Stützrolle auf Bohrtürmen oder Bohrplattformen Rechnung getragen werden.

### Kurze Beschreibung der Zeichnungen

Ein Ausführungsbeispiel der Erfindung wird anhand einer Zeichnung näher erläutert. Dabei zeigen:
- Fig. 1: in einem Querschnitt eine Stützrolle mit einem Umring und einem darin eingesetzten Wälzlager,
- Fig. 2: die Stützrolle entsprechend Fig. 1 in einer dreidimensionalen Ansicht, und
- Fig. 3: einen Ausschnitt der Umfangsfläche des Umrings.

### Detaillierte Beschreibung der Zeichnungen

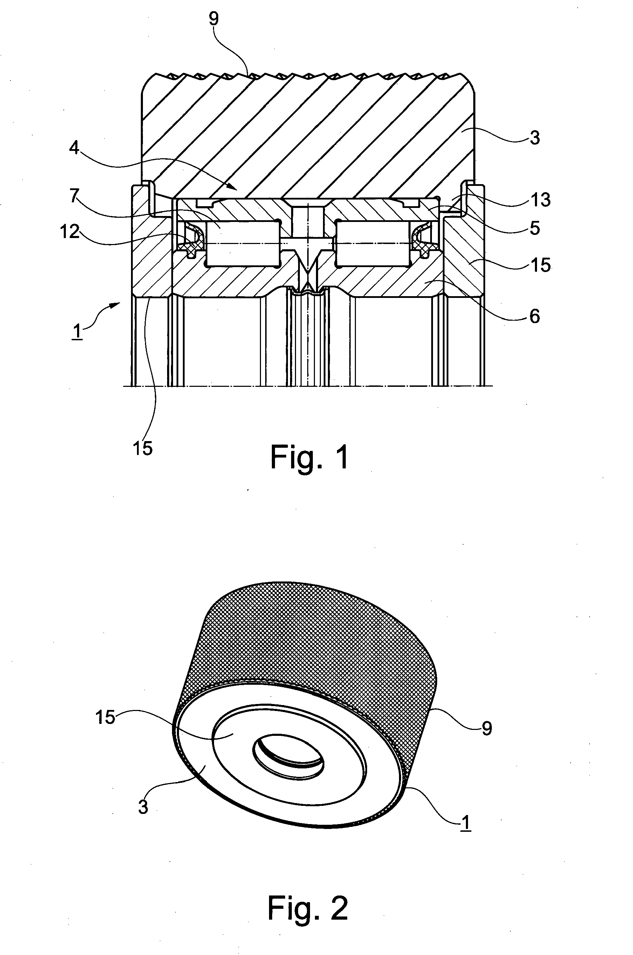

In Fig. 1 ist in einem Querschnitt eine Hälfte einer Stützrolle 1 dargestellt, die zum Hantieren von Bohrstangen in einer Greifklaue eines Greifers einsetzbar ist. Die dargestellte Stützrolle 1 umfasst einen Umring 3 aus gehärtetem und rostfreiem Stahl, dem ein Wälzlager 4 drehfest eingesetzt ist. Das Wälzlager 4 umfasst einen Außenring 5, sowie einen hierzu relativ drehbaren Innenring 6. Zwischen Außenring 5 und Innenring 6 sind eine Anzahl von Wälzkörpern 7 angeordnet. Der Außenring 5 ist mit dem Umring 3 über einen Presssitz fest verbunden.

Zur Herstellung eines sicheren Reibschlusses des Umrings mit den zu ergreifenden und zu manipulierenden Bohrstangen weist der Umring 3 eine gerändelte Umfangsfläche 9 auf.

Das Wälzlager 4 ist als ein doppelreihiges und vollrolliges Zylinderrollenlager ausgebildet. Es ist insofern sehr steif und in der Lage, insbesondere in radialer Richtung sehr hohe Traglasten aufzunehmen. Beidseitig ist im Wälzlager 4 jeweils zwischen dem Außenring 5 und dem Innenring 6 ein Dichtring 12 angeordnet. Dieser schützt den Innenraum des Wälzlagers 4 vor Verunreinigungen. Auch bleibt hierdurch die Schmierung des Wälzlagers 4 sicher erhalten.

Der Umring 3 erstreckt sich in axialer Richtung beidseitig über den Außenring 5 des Wälzlagers 4 hinaus. Auf einer Seite des Umrings 3 ist ein umlaufender Bund 13 ausgebildet, der für das eingesetzte Wälzlager 4 einen Axialanschlag bildet.

Auf beiden Seiten des Wälzlagers 4 ist dem Innenring 6 jeweils eine Distanzscheibe 15 aufgesetzt. Die Distanzscheibe 15 ist aus einem Stahl gefertigt und zusätzlich mit einer Korrosionsschutzschicht versehen. Die Distanzscheiben 15 sind jeweils in axialer Richtung vom Außenring 5 und in radialer Richtung vom Umring 3 beabstandet, sodass der Umring 3 mit dem Außenring 5 verschleißfrei gegenüber den Distanzscheiben 15 rotieren kann.

In Fig. 2 ist die Stützrolle 1 gemäß Fig. 1 in einer dreidimensionaler Ansicht dargestellt. Auf der sichtbaren Stirnseite erkennt man die Distanzscheibe 15 sowie den Umring 3. Deutlich erkennbar ist die gerändelte Umfangsfläche 9 des Umrings 3.

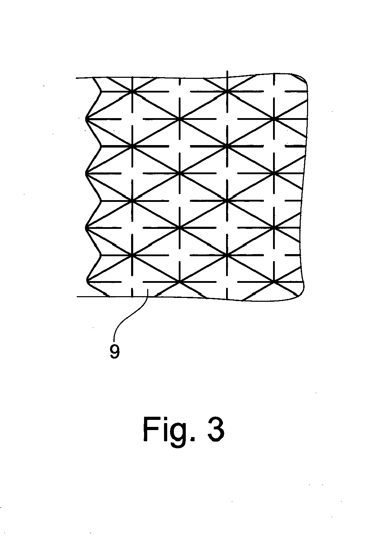

In Fig. 3 ist ein Ausschnitt der gerändelten Umfangsfläche 9 des Umrings 3 der Stützrolle 1 entsprechend Fig. 1, 2 gezeigt. Die dargestellte, sich durch Einbringung von quer zueinander verlaufenden Rillen ergebende Rändelung oder Riffelung entspricht der DIN 82. Man erkennt die sich zwischen den eingebrachten Rillen jeweils ergebenden spitzen Teilflächen.

### Bezugszeichenliste

| | |
|---|---|
| 1 | Stützrolle |
| 3 | Umring |
| 4 | Wälzlager |
| 5 | Außenring |
| 6 | Innenring |
| 7 | Wälzkörper |
| 9 | gerändelte Umfangsfläche |
| 12 | Dichtring |
| 13 | Bund |
| 15 | Distanzscheibe |

## Patentansprüche

1. Stützrolle (1), insbesondere zum Greifen eines drehbaren Bohrgestänges, umfassend einen Umring (3) mit einer gerändelten Umfangsfläche (9) und ein Wälzlager (4) mit einem Außenring (5), mit einem relativ zum Außenring (5) drehbaren Innenring (6) und mit einer Anzahl von zwischen dem Außenring (5) und dem Innenring (6) angeordneten Wälzkörpern (7), wobei das Wälzlager (4) mit seinem Außenring (5) drehfest in den Umring (3) eingesetzt ist.

2. Stützrolle (1) nach Anspruch 1,
wobei der Umring (3) aus einem rostfreien, insbesondere gehärteten, Stahl gefertigt ist.

3. Stützrolle (1) nach Anspruch 1,
wobei der Außenring (5) mittels eines Presssitzes in den Umring (3) eingesetzt ist.

4. Stützrolle (1) nach einem der vorhergehenden Ansprüche,
wobei das Wälzlager (4) als ein vollrolliges Zylinderrollenlager ausgebildet ist.

5. Stützrolle (1) nach einem der vorhergehenden Ansprüche,
wobei das Wälzlager (4) doppelreihig ausgebildet ist.

6. Stützrolle (1) nach einem der vorhergehenden Ansprüche,
wobei der Umring (3) in axialer Richtung über den Außenring (5) des Wälzlagers (4) hinaus verlängert ist.

7. Stützrolle (1) nach einem der vorhergehenden Ansprüche,
wobei in axialer Richtung dem Innenring (6) des Wälzlagers (4) eine Distanzscheibe (15) aufliegt.

8. Stützrolle (1) nach Anspruch 7,
wobei die Distanzscheibe (15) axial vom Außenring (5) und radial vom Umring (3) beabstandet ist.

9. Stützrolle (1) nach Anspruch 7 oder 8,
wobei die Distanzscheibe (15) mit einer Korrosionsschutzschicht versehen ist.
